# EUROPEAN PATENT APPLICATION

(11) **EP 4 534 599 A1**
(43) Date of publication of application: **09.04.2025**
(21) Application number: 24204713.2
(22) Date of filing: 04.10.2024
(51) Int. Cl.: C08L 53/02, C08L 23/12, C08L 75/06, C08L 75/08, B66B 7/06

(54) **THERMOPLASTIC ELASTOMER COMPOSITION WITH IMPROVED METAL ADHESION PROPERTIES**

(30) Priority: 06.10.2023 US 202363588321 P
(71) Applicant: Kraton Polymers Nederland B.V., 1322 CE Almere (NL)
(72) Inventor: Bhattacharya, Aparajita, Houston, 77084 (US)
(74) Representative: Henkel & Partner mbB

(57) **Abstract**

The disclosure relates to a thermoplastic elastomer composition comprising a styrenic block copolymer for improved adhesion properties, particularly to metals. The thermoplastic elastomer composition comprises, at least, a hydrogenated styrenic block copolymer (HSBC), a polypropylene (PP), and a thermoplastic polyurethane (TPU). The composition provides comparable or better performance than a TPU-based composition containing a plasticizer/oil. The thermoplastic elastomer composition further comprising a modified hydrogenated styrenic block copolymer containing a maleic anhydride.

## Description

### FIELD

The present disclosure relates to a thermoplastic elastomer composition comprising a hydrogenated styrenic block copolymer for improved metal adhesion properties, and articles made thereof, e.g., jacket material for elevator cables.

### BACKGROUND

Coated steel belts (CSBs) are becoming widely used in elevator systems due to their good performance. The reliability and safety of the belts are the most important factors for elevator operation. Steel wires coated with thermoplastic have found a wider range of applications in the field of science and engineering. There are different purposes for polymer coating of steel wire and strands, however, the undisputable requirement of polymer coating of steel wire is better balance between weight reduction, strength, and flexibility, which depends strongly on good control of adhesion between steel and the polymer or vice versa.

The most common / conventional polymers used as a jacketing material in CSB technology are polyamides, polyurethanes, or thermoplastic vulcanizates (TPVs). These conventional polymers are adhered to the steel belt. However, steel-polymer interfaces frequently suffer from poor adhesion strength that is undermining their long-term stability under external stress because of weak interaction between the steel and polymer surfaces. Some of these polymers face degradation issues during their service life, resulting in deterioration of surface, physical, and mechanical properties over time.

There is a need for improving adhesion of thermoplastic compounds to metal surfaces. Thermoplastic elastomers provide improved adhesion to the metal surfaces due to their improved tensile properties and flow behavior for processability.

### SUMMARY

In one aspect, the disclosure relates to thermoplastic elastomer composition comprising, consisting essentially of, or consisting of, 8-60 wt. % of a polypropylene having a melt flow rate of 3-60 g/10 min at 230 °C and 2.16 kg load ASTM D1238 and a density of < 1 g/cm³, 2-12 wt. % of a thermoplastic polyurethane having a density of 1-1.2 g/cm3, 0-55 wt. % of a modified hydrogenated styrenic block copolymer and 38-75 wt. % of a hydrogenated styrenic block copolymer. The hydrogenated styrenic block copolymer is represented by at least one formula selected from S-E/B/S-S, (S-E/B/S)nX, and (S-E/B/S-S)nX, where n is an integer from 2 to 30, and X is residue of a coupling agent. Each block S is a polymer block composed of vinyl aromatic units, and each block S has a peak molecular weight of 5 to 40 kg/mol measured according to ASTM 5296-19. Each block E / B/ S is a copolymer block composed of ethylene units, butylene units and of vinyl aromatic units, and each block E / B/ S has a peak molecular weight of 35-300 kg/mol measured according to ASTM 5296-19. The hydrogenated styrenic block copolymer has a mole ratio between ethylene units and butylene units of 10:90 to 65:35, measured by ¹HNMR, a residual unsaturation of < 0.5 meq / g measured by ¹HNMR, a total vinyl aromatic unit content of 25 to 65 wt.% and a peak molecular weight of 40-500 kg/mol. The thermoplastic elastomer composition has a melt flow rate of 1.0 - 45 g/10 min according to ASTM D-1238 at 230 °C and 2.16 kg load, a Shore A hardness at 10 sec of 40 -100 according to ASTM D-2240, and a peel force of 45-300 gf / 25mm against galvanized steel substrate according to ASTM D-3330.

In a second aspect, the modified hydrogenated styrenic block copolymer present is in an amount of 2-15 wt.%.

In a third aspect, the modified hydrogenated styrenic block copolymer contains at least one functional group selected from the group consisting of: a carboxylic acid group and their salts, anhydrides, esters, imide groups, amide groups, an epoxy groups and an acid chloride.

In a fourth aspect, the modified hydrogenated styrenic block copolymer is a maleic anhydride functionalized hydrogenated styrenic block copolymer having 0.1 - 10 wt. % of maleic anhydride, based on total weight of the modified hydrogenated styrenic block copolymer.

In a fifth aspect, the disclosure relates to an article comprising the thermoplastic elastomer composition for use as an elevator sheave liner, a belt, a timing belt, a conveyor, a seamless belt, a transfer separation device, or a charging device.

### DESCRIPTION

The following terms will have the following meanings:

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C, e.g., A only, B only, or C only.

"Any of A, B, and C" refers to one or more options from A, B, and C, e.g., A only, B only, C only, A and B, A and C, A and B and C, etc.

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Polystyrene content" or "PSC" or "Total Vinyl Aromatic Unit Content" of a block copolymer refers to the weight % of vinyl aromatic, e.g., styrene in the block copolymer, calculated by dividing the sum of molecular weight of all vinyl aromatic units by the total molecular weight of the block copolymer. Total vinyl aromatic unit content (PSC) can be determined using any suitable methodology such as proton nuclear magnetic resonance (¹HNMR).

"Monovinyl arene," or "monoalkenyl arene," or "vinyl aromatic" refers to an organic compound containing a single carbon-carbon double bond, at least one aromatic moiety, and a total of 8 to 18 carbon atoms, such as 8 to 12 carbon atoms. Examples include any of styrene, o-methyl styrene, p-methyl styrene, p-tertbutyl styrene, 2,4-dimethyl styrene, alpha-methyl styrene, vinylnaphthalene, vinyltoluene, vinylxylene, or mixtures hereof. In embodiments, the monoalkenyl arene block comprises a substantially pure monoalkenyl arene monomer. In some embodiment, styrene is the major component with minor proportions (less than 10 wt. %) of structurally related vinyl aromatic monomers such as o-methylstyrene, p-methyl styrene, p-tert-butyl styrene, 2,4- dimethyl styrene, a-methylstyrene, vinylnaphtalene, vinyltoluene, vinylxylene or combinations thereof. In embodiments, styrene alone is used.

"Vinyl content" refers to the content of a conjugated diene that is polymerized via 1,2-addition in the case of butadiene, and / or via 3,4-addition in case of isoprene, resulting in a monosubstituted olefin, or vinyl group, adjacent to the polymer backbone. Vinyl content can be measured by nuclear magnetic resonance spectrometry (¹HNMR).

"Molecular weight" or M_{w} refers to the polystyrene equivalent molecular weight in kg/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC are polystyrene equivalent molecular weights or apparent molecular weights, measured at the peak of the GPC trace, and commonly referred to as polystyrene equivalent "peak molecular weights," designated as Mₚ. Individual GPC block M_{w} can be calculated by the difference of Mₚ measured before and after the considered block polymerization. For example, M_{w} of block B is the Mₚ of species A-B minus the Mₚ of block A.

"Oil-free" refers to a composition with < 0.1 wt.%, or < 0.05 wt.%, or < 0.01 wt. %, paraffinic oil present based on the total weight of the composition.

"HSBC" refers to a selectively hydrogenated styrenic block copolymer. The hydrogenated styrenic block copolymer is based on copolymerized conjugated diene and styrenic monomers and in which a significant fraction of the double bonds resulting from the conjugated diene units have been reduced or hydrogenated, with "selectively" meaning the conjugated bond fully (e.g., > 95%, or > 99%) hydrogenated and the aromatic bond being a lot less hydrogenated (e.g., 0 to 15%).

"Hydrogenation level" (H2%) refers to the level of saturation of the olefinic double bonds into the block copolymer, which can be determined using UV-VIS spectrophotometry and / or ¹HNMR and / or via ozonolysis titration.

"Residual Unsaturation (RU)" refers to the levels of unsaturation, i.e., carbon-carbon double bonds per gram of block copolymer. RU can be measured using nuclear magnetic resonance (¹HNMR) or ozonolysis titration.

"Unit" when used in the concept of polymer unit or copolymer unit refers to repeating building blocks constituting the considered polymer or copolymer. Those polymer units are usually directly or indirectly related to the monomers that were polymerized or copolymerized to produce the polymer or copolymer.

The disclosure relates to a thermoplastic elastomer composition having improved adhesion properties, particularly to metals. The thermoplastic elastomer composition comprises, consists essentially of, or consists of, at least a hydrogenated styrenic block copolymer (HSBC), a polypropylene (PP), and a thermoplastic polyurethane (TPU). The composition provides comparable or better performance than a TPU-based composition containing a plasticizer.

Hydrogenated Styrenic Block Copolymer (HSBC): The thermoplastic elastomer composition comprises at least one hydrogenated styrenic block copolymer (HSBC) obtained by hydrogenation of a styrenic block copolymer (SBC).

In embodiments, the HSBC is any of a linear or branched (multi-armed) block copolymer, comprising: at least one polymer block S derived from a vinyl aromatic monomer, and at least one of: a) a polymer block E/B which is an ethylene / butylene block obtained from the hydrogenation of polymerized 1,3-butadiene monomers; or b) a polymer block EP which is an ethylene-propylene block obtained from the hydrogenation of polymerized isoprene monomers. The vinyl aromatic monomer can be introduced or copolymerized with 1,3-butadiene and / or isoprene monomers by any order and in any distribution to form any of configurations as described.

In embodiments, HSBC is represented by at least one formula selected from: S-E/B/S-S, (S-E/B/S)ₙX, (S-E/B/S-S)ₙX, or S-EP-S, (S-EP)ₙX, with n = an integer of 2 to 7 and X is the residual of a coupling agent. Each S block is a vinyl aromatic unit. E/B/S is a copolymerized ethylene unit / butylene unit / and vinyl aromatic unit. EP is an ethylene-propylene block.

In preferred embodiments, HSBC is represented by at least one formula selected from: S-E/B/S-S, (S-E/B/S)ₙX, (S-E/B/S-S)ₙX, and mixtures thereof, with n = an integer of 2 to 7 and X is the residual of a coupling agent. Each S block is a vinyl aromatic block. E / B / S is a copolymer block composed of ethylene ("E") units, butylene ("B") units, and of vinyl aromatic ("S") units.

In embodiments, the vinyl aromatic monomer is selected from the group consisting of styrene, alpha-methylstyrene, methyl styrene, para-methylstyrene, para-ethylstyrene, para-n-propylstyrene, para-iso-propylstyrene, para-n-butylstyrene, para-sec-butyl styrene, para-iso-butylstyrene, para-t-butylstyrene, isomers of para-decylstyrene, isomers of para-dodecylstyrene, dimethyl styrene, halogenated styrene, methoxy styrene, acetoxy styrene, vinyl toluene, isomers of vinyl toluene, vinyl xylene, 4-vinylbiphenyl, vinyl naphthalene, vinyl anthracene, and mixtures thereof.

In embodiments, each copolymerized E / B / S block has E to B mole ratio of 10:90 to 65:35, or 20:80 to 60:40, or 25:75 to 55:45, which can be determined by ¹HNMR.

In embodiments, the block E / B / S contains 1,3-butadiene monomer incorporated by 1,2-addition in an amount of 15 - 50, or 18 - 45, or 20 - 40 wt.%, based on total weight of the polymerized 1,3-butadiene monomer in the block E / B/ S, with the remainder being 1,4-addition.

In embodiments, the block S constitutes from 5 - 25, or 6 - 22, or 7 - 20, or 8 - 15 wt.%, the block EP constitutes from 40 - 65, or 45 - 60, or 45 - 65 wt.%, and the block E / B/ S constitutes from 10 - 35, or 12 - 30, or 15 - 25 wt.%, based on total weight of the HSBC.

The block S derived from the polymerized vinyl aromatic monomer units can be essentially left unhydrogenated. In embodiments, the block S has a hydrogenation level of < 30, or < 20, or < 10, or < 5%, based on total double bonds present in the block S. In embodiments, the polyisoprene block is hydrogenated to a hydrogenation level of > 80, or > 85, or > 90, or > 95, or > 98, or > 99 or up to 100%, based on total double bonds present in the polyisoprene block. In embodiments, the polybutadiene block is hydrogenated to a hydrogenation level of > 80, or > 85, or > 90, or > 95, or > 98, or > 99 or up to 100%, based on total double bonds present in the polybutadiene block.

In embodiments, the polybutadiene block has a residual unsaturation or RU of 0 - 0.5 meq/g, 0.05- 0.5 meq/g, or < 0.5 meq/g, or <0.4 meq/g, or < 0.3 meq/g, or < 0.2 meq/g, or < 0.1 meq/g, based on total double bonds present in the polybutadiene block.

In embodiments, each polymer block S has a peak molecular weight of 2-35 kg/mol, 5-40 kg/mol, or 7-35 kg/mol, or 9-30 kg/mol, or at least 9.0 kg/mol, or at least 8.5 kg/mol, or at least 5.0 kg/mol. In embodiments, the block E / B / S has a peak molecular weight of 35-300 kg/mol., or 40 -250 kg/mol., or 45 - 225 kg/mol., or 50 - 200 kg/mol., or 60 - 180 kg/mol., or > 35 kg/mol., or > 40 kg/mol., or < 45 kg/mol., or < 300 kg/mol. In embodiments, the peak molecular weight of the E / B / S block is determined as the subtraction of the S block peak molecular weight from the S-E / B / S peak molecular weight.

In embodiments, the HSBC has an average 1,2-vinyl or 3,4-vinyl content of 25-90 wt. %, or 25-80 wt. % or 25- 75 wt. %, or 20-65 wt. %, or 25-55 wt. % 30-50 wt. %, or >15 wt. %, > 20 wt. %, or < 75 wt.%, or < 90 wt. %, or < 80 wt. %. Vinyl content can be measured before or after hydrogenation, via ¹HNMR.

In embodiments, an HSBC having (S-E/B/S)ₙX or (S-E/B/S-S)ₙX structure has a coupling efficiency of > 50%, or > 60%, or > 70%, or > 80%, or > 90%.

In embodiments, the HSBC has a total vinyl aromatic unit content (PSC) of > 15 wt. %, or 20-70 wt. %, or 25-65 wt. % or 30-55 wt. %, or < 70 wt. %, < 65 wt. %, or < 60 wt. %.

In embodiments, the HSBC has a peak molecular weight (Mₚ) of 40 - 500 kg/mol, or 60 - 400 kg/mol, or 75-250 kg/mol, or < 400 kg/mol or <300 kg/mol, or < 200 kg/mol.

In embodiments, the HSBC is present in an amount of 40 - 80 wt. %, or 38 - 75 wt. %, or < 80 wt. %, < 70 wt. %, or > 40 wt. %, or 45 - 75 wt. %, or 50 - 65 wt.% based on the weight of the thermoplastic elastomer composition.

Modified HSBC (Optional): In embodiments, the thermoplastic elastomer composition further comprises a modified HSBC. The modified HSBC is herein defined as a functionalized block copolymer (FG-HSBC). In embodiments, the HSBC is modified / functionalized (grafted) with the incorporation of functional groups into the base polymer. The functional groups are selected from monomers capable of reacting with the base polymer, e.g., in solution or in the melt by free radical mechanism.

In embodiments, the monomers are ethylenically unsaturated to take part in free radical reactions. In embodiments, by grafting unsaturated monomers which have a slow polymerization rate, the resulting graft copolymers contain little or no homopolymer of the unsaturated monomer, and contain only short, grafted monomer chains which do not separate into separate domains.

In embodiments, the monomers for functionalization have one or more functional groups or their derivatives, e.g., carboxylic acid groups and their salts, anhydrides, esters, imide groups, amide groups, epoxy groups, acid chlorides, other polar moieties attached to ligands that can be activated to form radicals and the like in addition to at least one point of unsaturation. Examples include maleic acid, maleic anhydride, maleic acid esters, maleic acid amides, maleic acid imides, maleic acid hydrazide, fumaric acid, fumaric acid esters, fumaric acid amides, fumaric acid imides, itaconic acid, itaconic anhydride, itaconic acid esters, itaconic acid amides, itaconic acid imides, itaconic acid hydrazides, and mixtures thereof.

The functionalities can be subsequently reacted with other modifying materials to produce new functional groups. For example, a graft of an acid-containing monomer can be suitably modified by esterifying the resulting acid groups in the graft with appropriate reaction with hydroxy-containing compounds of varying carbon atoms lengths. The reaction can take place simultaneously with the grafting or in a subsequent post modification reaction.

In embodiments, the modified hydrogenated styrenic block copolymer contains 0.02 - 20 wt. %, or 0.1 - 10 wt. %, or 0.2 - 5 wt. %, or > 0.5 wt.%, or < 15 wt.%, or < 20 wt.% of a maleic anhydride functional group as grafted portion(s), based on the total weight of the modified HSBC.

In embodiments, the modified HSBC is present in an amount of 0-55 wt.%, or 2-50 wt. %, or 5- 45 wt. %, or 10-35 wt. %, or 15-30 wt. %, or 10-20 wt. %, or 2- 15 wt. % based on the total weight of the thermoplastic elastomer composition.

Polypropylene (PP):The thermoplastic elastomer composition further comprises a polypropylene, a polypropylene homopolymer. Polypropylene homopolymers suitable for the composition include any type of polypropylene e.g., the polypropylene homopolymer may be atactic polypropylene, isotactic polypropylene, hemi-isotactic polypropylene, syndiotactic polypropylene, or combinations thereof. A polymer is "atactic" when its pendant groups are arranged in a random fashion on both sides of the chain of the polymer. In contrast, a polymer is "isotactic" when all its pendant groups are arranged on the same side of the chain and "syndiotactic" when its pendant groups alternate on opposite sides of the chain. In hemi-isotactic polymer, every other repeat unit has a random substituent.

In embodiments, the polypropylene has a density of 0.85-0.99 g/cm³, or < 0.87 g/cm³, or < 0.88 g/cm³, or < 0.89 g/cm³, < 0.90 g/cm³, or < 0.99 g/cm³ , or < 1 g/cm³ measured according to ASTM 1505 and a softening point of 10 -120 °C, or < 120 °C, or < 110 °C, or < 100 °C, or < 90 °C, or <80 °C, or < 70 °C measured according to ASTM D3104.

In embodiments, the polypropylene has a melt flow rate (MFR) of 3-60, or < 60, or < 55, or < 45, or < 35, or < 25, or >2, or > 5 g/10 min at 230 °C and 2.16 kg load measured according to ASTM D1238.

In embodiments, polypropylene is present in an amount of 8- 60 wt. %, or 15-50 wt.%, or 15-40 wt.%, or 20-40 wt. %, or > 13 wt.%, based on the total weight of the thermoplastic elastomer composition.

Thermoplastic polyurethane (TPU):The thermoplastic elastomer composition further comprises a thermoplastic polyurethane (TPU) compound. The TPU is selected from the group of polyester-based TPUs, polyether- based TPUs, and combinations thereof. A "polyester-based" TPU is a TPU that includes at least two ester groups present therein and/or is formed from a reactant that includes a polyester bond, and a "polyether-based" TPU is a TPU that includes at least two ether groups present therein and/or is formed from a reactant that includes a polyether bond.

The TPU typically comprises the reaction product of a polyol and an isocyanate. In embodiments, the TPU is the polyester based TPU and includes the reaction product of a polyester polyol and an isocyanate. Suitable polyester polyols may be produced from a reaction of a dicarboxylic acid and a glycol having at least one primary hydroxyl group. Suitable dicarboxylic acids may be selected from the group of, but are not limited to, adipic acid, methyl adipic acid, succinic acid, suberic acid, sebacic acid, oxalic acid, glutaric acid, pimelic acid, azelaic acid, phthalic acid, terephthalic acid, isophthalic acid, and combinations thereof. Glycols that are suitable for use in producing the polyester polyols may be selected from the group of, but are not limited to, ethylene glycol, butylene glycol, hexanediol, bis(hydroxymethylcyclohexane), 1 ,4-butanediol, diethylene glycol, 2,2-dimethyl propylene glycol, 1,3-propylene glycol, and combinations thereof.

In embodiments, the TPU is a polyether based TPU and includes the reaction product of a polyether polyol and an isocyanate. Suitable polyether polyols may be selected from the group of, but are not limited to, polytetramethylene glycol, polyethylene glycol, polypropylene glycol, and combinations thereof.

In embodiments, the examples of suitable polyols include but are not limited to, glycols, polyester polyols, polyether polyols, modified polyether polyols, polyester ether polyols, castor oil polyols, polyacrylate polyols, copolymers, and mixtures thereof.

In embodiments, the TPU has a density of 1-1.2 g/cm³, or < 1.2 g/cm³, or < 1.15 g/cm3, or < 1.1 g/cm³, or > 1 g/cm³ measured according to ASTM D792.

In embodiments, the TPU is present in an amount of 0.1 to 15 wt.%, or 1 -12 wt. %, or 2- 12 wt. %, or 0.2 - 5 wt. %, or > 0.5 wt.%, or < 15 wt.% by the total weight of the thermoplastic elastomer composition.

Optional Components: The thermoplastic elastomer composition optionally includes additional components including, e.g., antioxidants, adhesion promoters, ultraviolet light stabilizers, rheology modifiers, biocides, corrosion inhibitors, dehydrators, colorants (e.g., pigments and dyes), fillers, surfactants, flame retardants, and combinations thereof.

In embodiments, antioxidants are selected from but not limited to, e.g., pentaerythritol tetrakis[3,?(3,5-di-tert-butyl-4-hydroxyphenyl)propionate], 2,2'-methylene bis(4-methyl-6-tert-butylphenol), phosphites including, e.g., tris- -nonylphenyl)-phosphite (TNPP) and bis(2,4-di-tert-butylphenyl)4,4'-diphenylene-diphosphonite, di-stearyl-3,3'-thiodipropionate (DSTDP), Butylated hydroxytoluene (BHT), butylated hydroxyanisole (BHA), tertiary-butylhydroquinone (TBHQ), and combinations thereof.

In embodiments, optional components are present in an amount of 0 - 35, or 0.5 - 25, or 0.1 - 15, or 1 - 10, or 2- 8, or < 1, or < 2, or < 5 wt.%, based on the total weight of the thermoplastic elastomer composition.

In embodiments, the composition comprises a plasticizer in an amount of from 0 - 15, or 0.5 - 15, or 1 - 12, or < 10, or < 5, or < 1 wt.%, based on the total weight of the thermoplastic elastomer composition. In embodiments, the composition is essentially plasticizer free or oil free (plasticizer is not intentionally added). In embodiments, the plasticizer is selected from the group of mineral oil, saturated hydrocarbons, naphthenic and paraffinic oils, oils with some aromatic content, and mixtures thereof.

Method of forming pellets or articles based on a thermoplastic elastomer composition: In embodiments, the individual components of the thermoplastic elastomer compositions are fed into a twin-screw extruder using a suitable device such as a V blender, a ribbon blender, etc. The final blend can be obtained by mixing the ingredients in a twin-screw extruder, a kneader, or the like. The pellets, compounds or articles can be formed from the resultant mixed and molten blend.

Properties of thermoplastic elastomer composition and compound prepared therefrom: The thermoplastic elastomer composition has one or more or all the following properties, with improved mechanical and thermal properties suitable for use in high-performance applications:

MFR (melt flow rate) of 3-45, or 5-40, or 7-35, or 10-30, or 15-25 or > 3, or >5, or > 7, or > 10, or > 15, or < 45 g/10 min at 230 °C and 2.16 kg load measured according to ASTM D-1238.

Tensile strength of 10-45, or 15-40, or 18-35, or >10, or >15, or > 25, >35, or < 45 MPa, measured according to ASTM D-412 using die C.

Elongation at break of: 300 - 900 %, > 300%, or > 350%, or > 400%, or > 500%, or > 550%, or > 600%, or > 700%, or > 800%, or < 900% measured according to ASTM D-412 using die C.

Peel force (gf / 25mm) of: 45-300, or >45, or > 50 or < 300 or 75-150 or 100-200, or 205- 250, or < 275 gf/25 mm, as determined under the 180⁰ peel adhesion test, performed according to FTM 1 (300 mm/min) - against Galvanized steel substrate.

Hardness (Shore A) measured at 10 seconds (sec.) of: 40 to 95, or > 40, or > 45, or > 55, or > 60, or > 75, or < 95 as determined by a ring and ball test measured according to ASTM D2240.

Tear Strength (N / mm) of: 45-120, or >45, >55, or >65, or >75, or > 85, or >90, < 120 N/mm measured according to ASTM D-624 using die C.

Tensile stress at 100% elongation of: 8-25 MPa, > 8 MPa, or < 25 MPa, or 10-18 MPa, measured according to ASTM D-412 using die C.

Tensile stress at 300% elongation of: 8-25 MPa, or 10-18 MPa, or > 8 MPa, > 10 MPa, or > 12 MPa, > 15 MPa, or < 25 Mpa, measured according to ASTM D-412 using die C.

Applications: The thermoplastic elastomer composition is suitable for applications where adhesion to a metal substrate is needed, with excellent durability and thermal aging resistance. Examples include: an elevator sheave liner, a belt, a timing belt, a conveyor, a seamless belt, a transfer separation device, a charging device, etc.

Examples: The following illustrative examples are intended to be nonlimiting.

The following test methods are used.

Glass transition temperature (T_{g}) is measured by Dynamic Mechanical Analysis (DMA) according to ASTM 4065. Temperature sweep experiments were conducted from -80 to 200 °C with a heating ramp of 2 °C/min and at 10 rad/s in the shear mode unless specified otherwise, where storage moduli (G'), loss moduli (G"), and loss factors (tan δ) were obtained as a function of temperature.

Tensile stress strain is measured according to ASTM D412 using dumbbell 'C' and a crosshead displacement speed of 500 mm/min. The reported melt flow rates (MFR) are measured according to D1238.

### The components used in examples include:

Antioxidant (AO) - a sterically hindered phenolic primary antioxidant.

Polypropylene (PP) - PP homopolymer with MFR of less 60 g/10 min according to ASTM D1238, density of 0.900 g/cm³ as per ASTM D1505.

Polyether TPU- A thermoplastic polyurethane elastomer, having a density of 1.15 g/cm³, hardness of 96 Shore A, a tensile strength of 55 MPa and elongation at break value of 500 %.

Polyester TPU- A thermoplastic polyurethane elastomer, having a density of 1.2 g/cm³, hardness of 95 Shore A, a tensile strength of 46.2 MPa and elongation at break value of 440%.

SEBSS - Hydrogenated styrenic block copolymer (coupled) having a general formula (S-E/B/S)ₙX, with vinyl aromatic content of 42 wt. %, shore hardness A of 65, and peak molecular weight (Mp) of 140 kg/mol, residual unsaturation of 0.1 meq/g , S block Mp of 10.6 kg/mol, E/B/S block Mp of 118.8 kg/mol (after coupling), and E to B mole ratio of 62:38.

FG-SEBSS- is a maleated SEBSS (coupled) having general formula MA-(S-E/B/S)ₙX, with vinyl aromatic content of 42 wt. %, shore hardness A of 65, and peak molecular weight (Mp) of 140 kg/mol, residual unsaturation of 0.1 meq/g , S block Mp of 10.6 kg/mol, E/B/S block Mp of 118.8 kg/mol (after coupling), bound maleic anhydride content of 1.3 wt.%, and E to B mole ratio of 62:38.

Examples: The compounding of the formulations in Table 1 was carried out using co-rotating twin screw extruder (TSE) with underwater pelletization. The feeding zone and a die temperature was maintained at 180°C and 245 °C at respective ends. The pellets obtained were made into a test plaque by injection molding. The injection nozzle temperature varied between 180°C and 245°C. The injection pressure was adjusted for each formulation to optimize the specimen appearance (no delamination) and at the same time eliminate flash while molding. The injection pressure varied from 15 psi to 58 psi depending on the formulation.

Table 1 contains formulations, for Examples 1-5 based on SEBS formulations with modified SEBS, PP and TPU.

**Table 1**

| Examples (Ex.) | 1 | 2 | 3 | 4 | 5 |
|---|---|---|---|---|---|
| SEBSS (wt. %) | 50.1 | 47.6 | 45.1 | 47.6 | 45.1 |
| Modified-SEBSS (wt. %) | 5 | 5 | 5 | 5 | 5 |
| PP (wt. %) | 44.8 | 42.3 | 39.8 | 42.3 | 39.8 |
| Polyether TPU (wt. %) | - | 5 | 10 | - | - |
| Polyester TPU (wt. %) | - | - | - | 5 | 10 |
| Antioxidant (wt. %) | 0.1 | 0.1 | 0.1 | 0.1 | 0.1 |

Properties of samples (test plaques) made from examples 1-5: Table 2 lists the properties of samples prepared from the formulation of Examples 1-5 in Table 1. Examples 1-5 show the same hardness for all test samples, which is in the range of 87-90 shore A. Examples 1-5 have a melt flow rate (MFR) of ~2 g/10 min at 230 °C at loading of 2.16kg. Examples 2 and 4, with 5% of the polyether and polyester TPU show similar tensile properties (tensile modulus, ultimate elongation, and tensile strength) and similar tear strength. Examples 3 and 5 with higher TPU (polyether/polyester) of 10 % shows reduction in tear strength and elongation at break. This reduction is observed with 5% loading levels where all the TPU comes on to the surface. While with 10% loading level, there may be some residual TPU which is incompatible with the SEBSS resulting in lowering of the properties. Examples 2-5 show a very high increase in peel force from galvanized steel substrates as tested by 180° peel tests compared to example 1 (without TPU).

**Table 2**

| Property | Unit | Ex. 1 | Ex. 2 | Ex. 3 | Ex. 4 | Ex. 5 |
|---|---|---|---|---|---|---|
| Tensile Stress 100% elongation | MPa | 11.4 | 10.1 | 9.4 | 10.5 | 9.5 |
| Tensile Stress 300% elongation | MPa | 12.1 | 10.9 | 10.0 | 11.3 | 10.7 |
| Tensile strength | MPa | 27.01 | 25.69 | 23.48 | 25.24 | 13.98 |
| Elongation at break | % | 807 | 827 | 690 | 791 | 680 |
| Tear Strength | N/mm | 115.4 | 99.7 | 96.2 | 103.3 | 89.1 |
| Hardness Shore A, 30 sec. | | 87.8 | 89.9 | 88.5 | 90.3 | 89.2 |
| MFR | Kg/min | 2.1 | 1.83 | 1.86 | 2.06 | 2.0 |
| 180° Peel Force | | 46.1 | 178.9 | 212.4 | 248 | 204.2 |

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A thermoplastic elastomer composition comprising:
a) 8-60 wt. % of a polypropylene having a melt flow rate of 3 - 60 g/10 min at 230° C and 2.16 kg load measured according to ASTM D1238 and a density of 0.85 - 0.99 g/cm³ measured according to ASTM D1505;
b) 2-12 wt. % of a thermoplastic polyurethane having a density of 1.0 - 1.2 g/cm³ measured according to ASTM D792;
c) 0 - 55 wt. % of a modified hydrogenated styrenic block copolymer; and
d) 38 - 75 wt. % of a hydrogenated styrenic block copolymer;
wherein the hydrogenated styrenic block copolymer is represented by at least one formula selected from S-E/B/S-S, (S-E/B/S)ₙX, and (S-E/B/S-S)ₙX, where n is an integer from 2 to 30, and X is residue of a coupling agent; and
each block S is a polymer block composed of vinyl aromatic units, and
each block S has a peak molecular weight of 5 to 40 kg/mol measured according to ASTM 5296-19;
each block E / B/ S is a copolymer block composed of ethylene units, butylene units and vinyl aromatic units, and each block E / B/ S has a peak molecular weight of 35-300 kg/mol measured according to
ASTM 5296-19;
wherein the hydrogenated styrenic block copolymer has:
a mole ratio of ethylene units to butylene units ranges from 10:90 to 65:35, as measured by ¹HNMR;
a residual unsaturation of < 0.5 meq / g, measured by ¹HNMR;
a total vinyl aromatic unit content (PSC) of 25 to 65 wt.%, measured by ¹HNMR;
a peak molecular weight (Mₚ) of 40 to 500 kg/mol, measured according to ASTM 5296-19; and
wherein the thermoplastic elastomer composition has:
a melt flow rate of 1.0 - 45 g/10 min measured according to ASTM D-1238 at 230° C and 2.16 kg load;
a Shore A hardness at 10 sec of 40 - 100 according to ASTM D-2240; and
a peel force of 45 - 300 gf / 25mm against galvanized steel substrate, measured according to ASTM D-903.

2. The thermoplastic elastomer composition of Claim 1, wherein the modified hydrogenated styrenic block copolymer is present in an amount of 2-15 wt.%.

3. The thermoplastic elastomer composition of any of Claims 1-2, wherein the modified hydrogenated styrenic block copolymer contains at least one functional group selected from the group consisting of: a carboxylic acid group and their salts, anhydrides, esters, imide groups, amide groups, epoxy groups, and acid chloride.

4. The thermoplastic elastomer composition of any of Claims 1-3, wherein the functional group is selected from maleic acid, maleic anhydride, maleic acid esters, maleic acid amides, maleic acid imides, maleic acid hydrazide, fumaric acid, fumaric acid esters, fumaric acid amides, fumaric acid imides, itaconic acid, itaconic anhydride, itaconic acid esters, itaconic acid amides, itaconic acid imides, itaconic acid hydrazides, and mixtures thereof.

5. The thermoplastic elastomer composition of any of Claims 1-4, wherein the modified hydrogenated styrenic block copolymer is a maleic anhydride functionalized hydrogenated styrenic block copolymer, having 0.1 - 10 wt. % of maleic anhydride, based on total weight of the modified hydrogenated styrenic block copolymer.

6. The thermoplastic elastomer composition of any of Claims 1-5, wherein the hydrogenated styrenic block copolymer has a total vinyl aromatic unit content of 50 -70 wt. % measured by ¹HNMR.

7. The thermoplastic elastomer composition of any of Claims 1-6, wherein the hydrogenated styrenic block copolymer has a peak molecular weight (Mp) of 50 - 300 kg / mol measured according to ASTM 5296-19.

8. The thermoplastic elastomer composition of any of Claims 1-7, wherein the thermoplastic elastomer composition has:
a melt flow rate of 1.0 - 8.0 g / 10 min measured according to ASTM D-1238 at 230° C and 2.16 kg load; and
a tensile stress at 100% elongation of 8-25 MPa measured according to ASTM D-412.

9. The thermoplastic elastomer composition of any of Claims 1-8, wherein the thermoplastic elastomer composition has an elongation at break of 500% to 900% measured according to ASTM D-412 using die C.

10. The thermoplastic elastomer composition of Claim 1, wherein the thermoplastic polyurethane is selected from the group of polyether-based thermoplastic polyurethanes, polyester-based thermoplastic polyurethanes, and mixtures thereof.

11. The thermoplastic elastomer composition of Claim 1, wherein the polypropylene has a density of 0.85-0.99 g/cm³ measured according to ASTM D1505.

12. The thermoplastic elastomer composition of Claim 1, wherein the polypropylene has a softening point of 10 -120 °C measured according to ASTM D3104. 5

13. The thermoplastic elastomer composition of any of Claims 1-9, wherein the thermoplastic elastomer composition further comprising a mineral oil in an amount of 0-15 wt. %.

14. An article comprising the thermoplastic elastomer composition of any of Claims 1-13.

15. The article of Claim 14, for use as an elevator sheave liner, a belt, a timing belt, a conveyor, a seamless belt, a transfer separation device, or a charging device.
